(19) Europäisches Patentamt
European Patent Office
Office européen des brevets

(11) EP 0 970 265 B1

(12) FASCICULE DE BREVET EUROPEEN

(45) Date de publication et mention de la délivrance du brevet:
**03.07.2002 Bulletin 2002/27**

(21) Numéro de dépôt: **98917223.4**

(22) Date de dépôt: **25.03.1998**

(51) Int Cl.[7]: **C25D 11/00**, D01F 11/16

(86) Numéro de dépôt international:
**PCT/FR98/00594**

(87) Numéro de publication internationale:
**WO 98/44172 (08.10.1998 Gazette 1998/40)**

# (54) PROCEDE DE REALISATION PAR VOIE ELECTROCHIMIQUE D'UN MATERIAU CARBONE DONT LA SURFACE EST MODIFIEE PAR DES GROUPES ORGANIQUES, UTILISATION DU MATERIAU MODIFIE

VERFAHREN ZUR ELEKTROCHEMISCHEN HERSTELLUNG EINES KOHLENSTOFFMATERIALS, DESSEN OBERFLÄCHE MIT ORGANISCHEN GRUPPEN MODIFIZIERT IST UND ANWENDUNG DES MODIFIZIERTEN MATERIALS

METHOD FOR PRODUCING BY ELECTROCHEMICAL PROCESS A CARBON-CONTAINING MATERIAL WITH ITS SURFACE MODIFIED BY ORGANIC GROUPS, USE OF THE MODIFIED MATERIAL

(84) Etats contractants désignés:
**AT BE CH DE DK ES FI FR GB GR IE IT LI LU NL PT SE**

(30) Priorité: **27.03.1997 FR 9703769**

(43) Date de publication de la demande:
**12.01.2000 Bulletin 2000/02**

(73) Titulaire: **CENTRE NATIONAL DE LA RECHERCHE SCIENTIFIQUE (CNRS)**
**75016 Paris (FR)**

(72) Inventeurs:
- **FAGEBAUME, Olivier**
  **F-75014 Paris (FR)**
- **PINSON, Jean**
  **F-94120 Fontenay sous Bois (FR)**
- **SAVEANT, Jean-Michel**
  **F-75013 Paris (FR)**

(74) Mandataire: **Laurent, Claire**
**Aventis Pharma S.A.**
**20 avenue Raymond Aron**
**92160 Antony (FR)**

(56) Documents cités:
**EP-B- 0 569 503**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 970 265 B1

Printed by Jouve, 75001 PARIS (FR)

## Description

La présente invention concerne un nouveau procédé de réalisation par réduction électrochimique d'un matériau carboné dont la surface est modifiée par des groupes organiques notamment fonctionnalisés, comprenant la mise en contact du matériau carboné avec sel de diazonium organique en solvant, éventuellement en présence d'un autre électrolyte, la polarisation négative du matériau carboné par rapport à une anode également en contact avec une solution dudit sel de diazonium organique ou en contact avec une solution électrolytique séparée par un séparateur convenable de la solution dudit sel.

Elle concerne également les matériaux carbonés modifiés obtenus par ledit procédé et l'utilisation de ces matériaux carbonés notamment pour la réalisation de matériaux composites ou pour la mise en oeuvre de réactions chimiques ou biologiques, ou pour la complexation des métaux.

Le brevet européen EP-B-569 503 décrit déjà un procédé de réalisation d'un matériau carboné dont la surface est modifiée par des groupes aromatiques notamment fonctionnalisés, par réduction électrochimique.

Ce procédé est caractérisé en ce qu'il consiste à fixer sur la surface de ce matériau un groupe aromatique par réduction électrochimique d'un sel de diazonium comportant ce groupe aromatique, en mettant en contact le matériau carboné avec une solution du sel de diazonium dans un solvant aprotique et en polarisant négativement le matériau carboné par rapport à une anode également en contact avec la solution du sel de diazonium.

Ce document indique de plus que pour que la réduction électrochimique du sel de diazonium conduise à la fixation du groupe aromatique de ce sel sur la surface du matériau carboné, il est nécessaire de réaliser la réduction dans un milieu aprotique ne contenant ni composé nucléophile, ni composé éthylénique, ni espèce capable de réagir sur le radical neutre plus rapidement que celui-ci ne se fixe sur la surface carbonée et d'opérer à un potentiel plus négatif que le potentiel de réduction du sel de diazonium.

On a maintenant trouvé de façon inattendue que la mise en oeuvre de ce procédé en solvant protique en milieu acide et avec le potentiel de la cathode fixé à une valeur telle que le radical neutre $R^\bullet$ correspondant au groupe organique notamment fonctionnalisé ne soit pas réduit et ne conduise pas à un carbanion, conduisait à la fixation sur la surface du matériau carboné d'un groupe organique.

Le procédé selon l'invention est donc caractérisé en ce que la réduction électrochimique est effectuée sur un sel de diazonium organique en solvant protique en milieu acide, et avec le potentiel de la cathode fixé à une valeur telle que le radical neutre $R^\bullet$ correspondant au groupe organique notamment fonctionnalisé ne soit pas réduit et ne conduise pas à un carbanion.

La réduction électrochimique peut être schématisée selon la réaction suivante :

$$RN_2^+ + e^- \rightarrow RN_2^\bullet \rightarrow R^\bullet + N_2$$

R étant un reste organique.

Le reste R se fixe sur un atome de carbone de la surface du matériau carboné. La liaison covalente formée est du type carbone du matériau carboné-carbone du reste organique.

Selon le procédé de l'invention, le potentiel de la cathode est fixé à une valeur telle que le radical neutre $R^\bullet$ ne soit pas réduit et ne conduise pas à un carbanion. Il faut donc ajuster le potentiel à une valeur qui n'est pas trop négative pour stabiliser le radical neutre $R^\bullet$.

On notera que le terme "reste" désigne la partie organique du diazonium.

On comprend que l'invention s'étend à tous le sels de diazonium dont les restes R sous forme radicalaire seront suffisamment stables pour se fixer sur un carbone du matériau carboné.

Le terme "groupe R" désignera le reste R fixé sur le matériau carboné, étant entendu que le groupe R aura une signification plus large que le reste R du fait des transformations chimiques subséquentes qu'il pourra subir comme cela sera compris au vu de la description qui va suivre.

L'invention concerne en particulier un procédé caractérisé en ce que le sel de diazonium répond à la formule :

$$ArN_2^+ X^- \qquad (I)$$

dans laquelle :

Ar est un reste aromatique en $C_6$-$C_{14}$ éventuellement substitué ou un reste hétéroatomique de 5 à 14 atomes éventuellement substitué, comportant un ou plusieurs hétéroatomes choisis parmi l'oxygène, l'azote, le soufre, le phosphore,

$X^-$ est un anion choisi parmi les halogènes, les sulfates, les phosphates, les perchlorates, les tetrafluoroborates, les carboxylates, les hexafluorophosphates.

Par "restes aromatiques", on entend tous les restes comportant un ou plusieurs noyaux benzèniques condensés en $C_6$-$C_{14}$ ou indépendants bien connus. A titre non limitatif on cite les noyaux phényle, naphtyle, anthryle, les noyaux tricondensés, les noyaux biphényles, etc...

Par "restes hétéroaromatiques" on entend tous les hétérocycles aromatiques comportant un ou plusieurs hétéroatomes tels que N, O, S, P, comportant notamment 5 à 14 atomes.

En fait, on comprend que l'invention n'est pas limitée à des composés particuliers, mais s'étend au contraire à tous les sels de diazonium pouvant être réduits pour conduire à un radical neutre $Ar^•$.

Parmi les restes aromatiques, on peut citer à titre d'exemple les restes aromatiques dont les substituants sont choisis dans le groupe constitué par :

- les radicaux aliphatiques, linéaires ou ramifiés, comportant éventuellement une ou plusieurs double(s) liaison(s), éventuellement substitués par des radicaux carboxyle, $NO_2$, amino protégé disubstitué, amino monosubstitué protégé, cyano, diazonium, alkoxy, alkoxycarbonyle, alkylcarbonyloxy, vinyle éventuellement fluoré, les atomes d'halogène,
- les radicaux aryle éventuellement substitués par des radicaux carboxyle, $NO_2$, amino protégé disubstitué, amino monosubstitué protégé, cyano, diazonium, alkoxy, alkoxycarbonyle alkylcarbonyloxy, vinyle éventuellement fluoré, les atomes d'halogène,
- les radicaux carboxyle, $NO_2$, amino protégé disubstitué, amino monosubstitué protégé, cyano, diazonium, alkoxy, alkoxycarbonyle, alkylcarbonyloxy, vinyle éventuellement fluoré, les atomes d'halogènes.

En ce qui concerne les radicaux vinyle éventuellement fluorés, ceux-ci doivent être compatibles avec la réaction prévue du diazoniurn.

Le terme "fonctionnalisé" signifie en particulier que les radicaux aromatiques ou hétéroaromatiques ou aliphatiques lorsque les radicaux aromatiques ou hétéroaromatiques sont substitués par un radical aliphatique comportent un ou plusieurs substituant(s) susceptible(s) de réagir avec un substrat ou un ou plusieur(s) substituant(s) pouvant être transformés en substituants susceptibles de réagir avec un substrat.

Ces substituants peuvent donc être très divers selon les applications auxquelles sont destinés les matériaux carbonés.

Parmi les substituants susceptibles de réagir directement avec une résine, notamment organique, on peut citer à titre d'exemple les groupes $-(CH_2)_n-COOH$, $-(CH_2)_n-CH_2-OH$, $(CH_2)_n-NH_2$, n étant un nombre entier compris entre 0 et 10, $-CH=CH_2$, $-CF=CF_2$.

Parmi les substituants précurseurs qui, après transformation, sont susceptibles de réagir avec une résine, notamment organique, on peut citer à titre d'exemple les groupes $NO_2$, $N_2^+$, $(CH_2)_n-CN$, $(CH_2)_n-CHO$, $(CH_2)_n-COOPr$, Pr étant un groupe protecteur, $(CH_2)_n-NHP'r$, $(CH_2)_n-N(P'r)_2$, $(CH_2)_n-N=P''r$, P'r, P"r étant des groupes protecteurs, n étant un nombre entier compris entre 0 et 10.

Parmi les substituants susceptibles de réagir direstement avec une molécule biologique, on peut citer les groupes $-(CH_2)_n-COOH$, $-(CH_2)_n-NH_2$, n étant un nombre entier compris entre 0 et 10.

Parmi les substituants précurseurs qui, après transformation, sont susceptibles de réagir avec une molécule biologique, on peut citer les groupes $NO_2$, $N_2^+$, $(CH_2)_n-CN$, $(CH_2)_n-CHO$, $(CH_2)_n-COPr$, Pr étant un groupe protecteur, n étant un nombre entier compris entre 0 et 10.

Parmi les substituant susceptibles de réagir directement avec des molécules organiques fonctionnelles, on peut citer les groupes $NO_2$, $(CH_2)_n-CONH_2$, $(CH_2)_n-CN$, $(CH_2)_n-CHO$, $(CH_2)_n-COOH$, $(CH_2)_n-CH_2OH$, $(CH_2)_n-NH_2$, n étant un nombre entier compris entre 0 et 10, $SO_2H$, $SO_3H$, $SO_2R$, $SO_3R$, R étant une chaîne carbonée aliphatique ou aromatique de 1 à 20 atomes de carbone.

Parmi les susbtituants précurseurs qui, après transformation, sont susceptibles de réagir avec des molécules organiques fonctionnelles, on peut citer les groupes $NO_2$, $(CH_2)_n-CONH_2$, $(CH_2)_n-COOPr$, Pr étant un groupe protecteur, $(CH_2)_n-NHP'r$, $(CH_2)_n-N(P'r)_2$, $(CH_2)_nN=P''r$, P'r, P"r étant des groupes protecteurs, $(CH_2)_n-CN$, $(CH_2)_n-CHO$, $(CH_2)_n-COOH$, $(CH_2)_n-CH_2OH$, n étant un nombre entier compris entre 0 et 10, $SO_2Pr$, $SO_3Pr$, Pr étant un groupe protecteur choisi parmi les significations de R.

Outre les substituants fonctionnels, les restes aromatiques ou hétéroaromatiques peuvent comporter un ou plusieurs substituants non réactifs tels que les radicaux alkyle ou alcényle.

Par radicaux alkyle ou alcényle, on entend notamment les radicaux linéaires ou ramifiés comportant 1 à 20 atomes de carbone, éventuellement un ou plusieurs hétéroatome(s), éventuellement une ou plusieurs double(s) liaison (s). Ces radicaux peuvent également comporter un ou plusieurs atome(s) d'halogène. Par extension les radicaux comprennent également les radicaux cycloaliphatiques.

A titre d'exemple on cite les sels de diazonium suivants :

Composé 1 : le térafluoroborate de 4-nitrobenzène diazonium

Composé 2 : le dichlorure de 3,3'-diméthoxy biphényle 4,4'bis diazonium de formule :

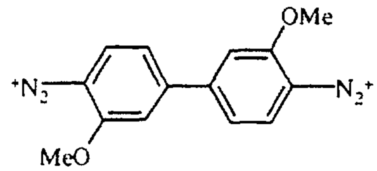

(Fast blue B cristallisé avec une molécule de $ZnCl_2$)

Composé 3 : le tétrafluoroborate de 4-carboxyméthyle benzène diazonium

Composé 4 : le tétrafluoroborate de 1,4-benzène bis diazonium.

Composé 5 : le tétrafluoroborate de chlorobenzyle 4-diazonium.

D'autres exemples de sels de diazonium utilisables dans la présente invention sont choisis parmi les sels de 4-chlorométhylphényle diazonium, 4-hydroxyméthylphényle diazonium, 4-carboxyphényle diazonium, 4-formylphényle diazonium, 4-acétylphényle diazonium, 4-isothiocyanatophényle diazonium, 4-N-FMOC-aminométhylphényle diazonium, 4-(4-hydroxyméthylphénoxyméthyl)-phényle diazonium, 4-(2,4-diméthoxyphényle-N-FMOC-aminométhyl)-phényle diazonium, 4-(phényl-N-FMOC-aminométhyl)-phényle diazonium, 4-(4-méthylphényl-N-FMOC-aminométhyl)-phényle diazonium, 4-(4-nitrophénylcarbonyl)-phényle diazonium, chlorure de trityle diazonium, chlorure de 2-chlorotrityle diazonium, hydroxyde de trityle diazonium, 9-N-FMOC-aminoxanthèn-3-yle diazonium, 4-(2,4-diméthoxyphénylhydroxyméthyl)-phényle diazonium, 4-(4-hydroxyméthylbenzoyl-oxyméthyl)-phényle diazonium, 4-(4- hydroxyméthylbenzoylaminométhyl)-phényle diazonium, 4-(4-hydroxyméthyl-3-méthoxyphénoxyméthyl)-phényle diazonium, etc...

L'électrode négative consituée par le matériau carboné doit être à une valeur de potentiel cathodique telle qu'elle puisse donner un électron au diazonium.

Cette valeur peut être mesurée par rapport à une électrode de référence et on comprend donc que cette valeur de potentiel variera selon les sels de diazonium.

En pratique, selon un procédé avantageux, la réduction cathodique des sels de diazonium est effectuée par voltamétrie cyclique répétitive, le potentiel de la cathode variant dans un intervalle de potentiel tel que le radical neutre $R^{\bullet}$ correspondant au groupe organique notamment fonctionnalisé ne soit pas réduit, ou par électrolyse à un potentiel plus négatif que le potentiel de réduction du sel de diazonium.

Parmi les solvants protiques, on peut citer à titre d'exemple l'eau, le méthanol, l'éthanol ou leurs mélanges ou les mélanges avec des solvants aprotiques par exemple l'acétonitrile, étant entendu que ce mélange résultant présente les caractéristiques d'un solvant protique.

Selon un mode de réalisation préféré, la solution peut comprendre éventuellement un électrolyte tel que les sels d'ammonium quaternaires ou les sels de métal alcalin solubles dans le milieu.

Parmi ceux-ci, on cite les halogénures, les acétates, tétrafluoborates, perchlorates et hexafluorophosphates alcalins ou d'ammonium quaternaire, en particulier le tétrafluoroborate de lithium ou un tétrafluoroborate de ($C_1$-$C_4$) alkyle ammonium comme le tétrafluoroborate de tétraéthylammonium.

L'électrolyte peut simplement être un acide choisi parmi l'acide chlorhydrique, sulfurique, nitrique, nitreux, phosphorique, tétrafluoroborique.

Les concentrations en sels de diazonium et en électrolyte sont généralement comprises entre $10^{-3}$ mol/l et $10^{-1}$ mol/l pour le sel de diazonium et entre $10^{-2}$ mol/l et 1 mol/l pour l'électrolyte.

Les acides peuvent être choisis parmi les acides minéraux tels que l'acide chlorhydrique, sulfurique, nitrique, nitreux, phosphorique ou tétrafluoroborique ou les acides organiques. Avantageusement, le pH est inférieur à 2.

Les matériaux carbonés modifiés sont récupérés et leur caractérisation peut être faite de plusieurs manières.

On cite la voltamétrie cyclique, la spectroscopie photoélectronique de rayons X et la microscopie à effet tunnel.

Les mesures effectuées confirment la fixation des groupes Ar sur la surface carbonée. La densité surfacique des groupes Ar dépend de l'encombrement stérique de ceux-ci et variera donc selon les groupes Ar considérés.

A titre d'exemple, de façon inattendue, on a trouvé que la réduction électrochimique dans les conditions de l'invention d'un sel de diazonium aromatique comportant un ou plusieurs substituants nitro conduit directement à la fixation du groupe aromatique et à la transformation du ou des groupements nitro en groupement $NH_2$ selon la réaction suivante :

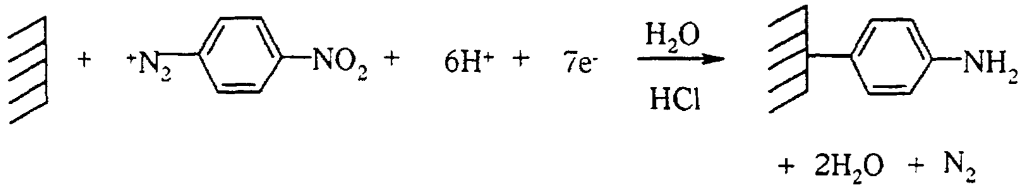

A titre d'exemple, on cite les sels de 4-nitrobenzène diazonium.

Selon une autre variante, les matériaux conducteurs carbonés dont la surface a été modifiée par le procédé selon l'invention sont soumis à une transformation subséquente des substituants fonctionnels. Par exemple, les substituants pourront être transformés pour réagir avec une résine, une molécule biologique, une molécule organique fonctionnelle.

L'invention s'étend donc aux matériaux carbonés transformés suite au procédé selon l'invention.

L'invention concerne également les matériaux carbonés susceptibles d'être obtenus par la procédé selon l'invention.

Ces matériaux carbonés modifiés, notamment de graphite ou de carbone vitreux se présentent selon une variante sous forme de fibres, de poudre, de feutre, de tissu, de billes, ou de composite carbone/carbone. Lorsque les matériaux se présentent sous forme de fibres, une application avantageuse consiste dans la réalisation de matériaux composites améliorés fibres/résine telle qu'une résine époxy.

L'invention concerne également des matériaux carbonés modifiés par des groupes R dont les substituants sont susceptibles de fixer, des cations métalliques, de manière covalente des composés chimiques tels que des agents complexants ou des molécules biologiques, telles que des protéines et en particulier des enzymes.

Selon une application avantageuse, les matériaux à la surface desquels sont fixés des groupes organiques fonctionnels susceptibles de réagir avec une molécule biologique sont utilisés pour la mise en oeuvre de réactions biologiques.

Selon une autre application avantageuse, les matériaux à la surface desquels sont fixés des groupes organiques fonctionnels susceptibles de réagir avec une molécule organique fonctionnelle ou complexante sont utilisés pour la mise en oeuvre de telles réactions.

Une application plus particulièrement avantageuse est notamment l'application du procédé selon l'invention à la chimie combinatoire. La chimie combinatoire peut être définie comme la préparation d'un ensemble de molécules appelé "librairie", leur nombre pouvant aller de quelques composés à plusieurs milliers. La synthèse combinatoire constitue une nouvelle stratégie qui permet de générer de façon systématique et simultanée un très grand nombre de molécules et d'étudier la relation structure-activité [F. Balkenhohl et al., *Combinatorial Synthesis of Small Organic Molécules,* Angew. Chem. Int. Ed. Engl., 1996, 35, pp.2288-2337].

La plupart du temps, la chimie combinatoire est conduite sur support solide [J.S. Früchtel and G. Jung, *Organic Chemistry on Solid Supports,* Angew. Chem. Int. Ed. Engl, 1996, 35, pp. 17-42]. Jusqu'à aujourd'hui, les supports les plus communément utilisés sont les supports de polystyrène associés à 1-2% de divinylbenzène ou de copolymère polystyrène-polyéthylène glycol (PEG-PS) [L.A. Thompson and J.A. Ellman, *Synthesis and Application of Small Molécule Libraries,* Chem. Rev., 1996, 96, pp. 555-600]. Ainsi, un autre objet de la présente invention est l'application des matériaux carbonés obtenus selon le procédé électrochimique tel que défini précédemment, en chimie combinatoire, et plus particulièrement l'application des matériaux carbonés à la surface desquels sont fixés des groupes organiques susceptibles de réagir avec des molécules organiques fonctionnelles pour constituer une librairie de composés organiques. Une telle utilisation est particulièrement avantageuse en ce sens qu'elle constitue une alternative aux supports polymériques classiques.

Pratiquement, une telle utilisation consiste à greffer des groupes organiques fonctionnalisés tels que définis ci-avant sur un matériau carboné selon le procédé de réduction électrochimique de la présente invention, puis à faire réagir lesdits groupes organiques avec diverses molécules organiques fonctionnelles afin de constituer une librairie de chimie combinatoire, et enfin à cliver les composés obtenus de la surface du matériau carboné.

Les réactions entre le groupe organique greffé sur le matériau carboné et les molécules organiques fonctionnelles sont toutes les réactions compatibles connues de l'homme du métier.

Les matériaux carbonés plus particulièrement utilisables en chimie combinatoires sont ceux possédant une surface utile optimale. Par exemple, on peut citer les feutres de carbone.

Dans ce cas particulier de l'utilisation du procédé selon la présente invention à la chimie combinatoire, on comprend qu'elle n'est pas limitée au greffage de composés particuliers, pourvu qu'ils s'agisse d'un sel de diazonium organique en solvant, de nombreux composés peuvent ainsi faire l'objet d'application pour la chimie combinatoire sur support carboné. On peut par exemple citer les sels suivants : les sels de 4-chlorométhylphényle diazonium, 4-hydroxyméthylphényle diazonium, 4-carboxyphényle diazonium, 4-formylphényle diazonium, 4-acétylphényle diazonium, 4-isothiocyanatophényle diazonium, 4-N-FMOC-aminométhylphényle diazonium, 4-(4-hydroxyméthylphénoxyméthyl)-phényle diazonium, 4-(2,4-diméthoxyphényle-N-FMOC-aminométhyl)-phényle diazonium, 4-(phényl-N-FMOC-aminométhyl)-phényle diazonium, 4-(4-méthylphényl-N-FMOC-aminométhyl)-phényle diazonium, 4-(4-nitrophénylcarbonyl)-phényle diazonium, chlorure de trityle diazonium, chlorure de 2-chlorotrityle diazonium, hydroxyde de trityle diazonium, 9-N-FMOC-aminoxanthèn-3-yle diazonium, 4-(2,4-diméthoxyphényl-hydroxyméthyl)-phényle diazonium, 4-(4-hydroxyméthylbenzoyloxyméthyl)-phényle diazonium, 4-(4- hydroxyméthylbenzoylaminométhyl)-phényle diazonium, 4-(4- hydroxyméthyl-3-méthoxyphénoxyméthyl)-phényle diazonium, etc...

D'autres molécules susceptibles d'être utilisées sont aussi citées dans P.H.H. Hermkens et al., *Solid-Phase Reactions : A Review of the Récent Literature*, Tetrahedron, 1996, Vol. 52, pp. 4527-4554, et P.H.H. Hermkens et al., *Solid-Phase Reactions II : A Review of the Literature Nov 95-Nov 96*, Tetrahedron, 1997, Vol. 53, pp. 5643-5678.

Parmi les matériaux carbonés modifiés, on peut citer à titre d'exemple ceux dont le groupe R correspond à la formule Ar, Ar étant un groupe aromatique en $C_6$-$C_{14}$ éventuellement substitué ou un groupe hétéroaromatique de 5 à 14 atomes éventuellement substitués comportant un ou plusieurs hétéroatomes choisis parmi l'oxygène, l'azote, le soufre, le phosphore.

La description détaillée de ces groupes est indiquée dans la partie procédé de l'exposé de l'invention.

Selon une variante, les groupes Ar sont subtitués par des radicaux SH, $SO_2H$, $SO_3H$, $SO_2R$, $SO_3R$.

L'invention concerne également les matériaux carbonés modifiés notamment de noir de carbone, de graphite pyrrolitique hautement orienté (HOPG), ou de carbone vitreux qui se présentent selon une variante sou forme de fibres, de poudres, de feutre, de tissu, de billes, ou de composites carbone/carbone.

De préférence, les fibres comportent des substituants susceptibles de réagir de façon covalente avec des radicaux présents sur une résine organique destinée à être associée aux dites fibres sous forme de matériaux composites.

Bien entendu, la nature de ces substituants est en général très variée et fonction de la résine organique considérée.

L'invention concerne également les matériaux composites comportant une matrice de résine organique renforcée par des fibres de carbone modifiées selon l'invention.

La matrice d'un matériau composite peut être un polymère thermodurcissable tel qu'une résine epoxy, ou une résine thermoplastique, par exemple une résine polyamide, polyéthylène ou polytétrafluoroéthylène.

Parmi les substituants susceptibles de réagir directement avec une molécule biologique, on peut citer à titre d'exemple les groupes COOH, $NH_2$.

Le procédé selon l'invention peut être mis en oeuvre à l'aide d'une cellule d'électrolyse connue telle que celle qui est décrite dans le brevet EP-B-569 503, figure 1 et description page 8, lignes 12 à 25 dont le contenu est incorporé par référence ou à l'aide d'une cellule à compartiments séparés.

Les exemples ci-après illustrent l'invention.

Tous les exemples sont effectués dans une cellule d'électrolyse dans laquelle est introduite une solution d'électrolyte et d'un des sels de diazonium suivants :

Composé 1 : le tétrafluoroborate de 4-nitrobenzène diazonium

Composé 2 : le dichlorure de 3,3'-diméthoxy biphényle 4,4'bis diazonium de formule :

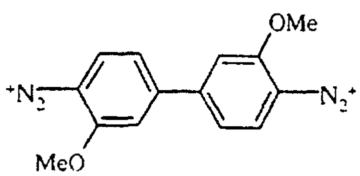

(Fast blue B cristallisé avec uine molécule de $ZnCl_2$)

Composé 3 : le tétrafluoroborate de 4-carboxyméthyle benzène diazonium

Composé 4 : le bis-tétrafluoroborate de 1,4-benzène bis diazonium.

Composé 5 : le tétrafluoroborate de chlorobenzyle 4-diazonium

Le milieu aqueux acide servant de solvant est l'eau en présence d'acide chlorhydrique ou sulfurique ou nitrique.

Dans la plupart des cas, l'acide sert d'électrolyte.

Les expériences sont effectuées sur des électrodes de carbone vitreux (CV).

Les figures annexées, partie intégrante de la description, représentent les voltamogrammes cycliques des expériences effectuées avec les différents composés :

## FIGURES

Figures 1a et 1b :

Voltamétrie cyclique de composé 1 dans l'acide sulfurique 0,1 M, sur électrode de CV, vitesse de balayage 0,2 V/s ; concentration du composé 1 : 1,5 mM (figure 1a), 1 mM (figure 1b) ; électrode de référence au calomel saturé (ECS) ; température à 20°C.

Figure 2 :

a) Greffage d'une électrode de CV dans une solution de 5 mM de tétrafluoroborate de 4-nitrobenzène diazonium 1 dans HCl 0,1 N.
b) Voltamogramme de la même électrode transférée dans l'acétonitrile (ACN) + 0,1 M $Net_4ClO_4$
c) Voltamogramme du nitrobenzène dans ACN + 0,1 M $Net_4ClO_4$ sur une électrode de CV. Vitesse de balayage 0,2 V/s ; références ECS.

Figure 3 :

a) Voltamogramme de tétrafluoroborate de 4-nitrophényl diazonium 1 (c=2 mM) sur fibre de carbone dans HCl 0,1 N.
b) Même fibre de carbone après greffage (1 minute au potentiel de la vague A) rinçage et transfert dans une solution ACN + 0,1 M $NEt_4ClO_4$.

Figure 4 :

Voltamogramme du composé 2 (c = 1 mM) dans HCl 0,1 M sur électrode de CV. Vitesse de balayage 0,2 V/ECS.

Figure 5 :

voltamétrie linéaire cyclique sur une électrode de carbone vtreux dans une solution de sel de diazonium du chlorure de 4-(amino)benzyle $2.10^{-3}$ M + tétrafloroborate de tétrabutylammonium 0,1 M + acide chlorhydrique 0,1 M dans l'acétonitrile. Vitesse de balayage v = 200 $mV.s^{-1}$. Courbe 1 = premier balayage, Courbe 2 = second balayage.

Figure 6 :

Spectroscopie de photoélectrons X de l'échantillon de plaques de carbone vitreux 1.

Figure 7 :

Spectroscopie de photoélectrons X de l'échantillon de plaques de carbone vitreux 2.

## EXEMPLES

Exemple 1

Une solution de diazonium 1 à une concentration de 1,5 mM en milieu aqueux acide ($H_2SO_4$ 0,1 M ou HCl 0,1 N) est soumise à une voltamétrie cyclique répétitive dans l'intervalle du potentiel de réduction du sel de diazonium à une température de 20°C et à une vitesse de défilement de 0,2 V/s.

Dans ces conditions 1 présente (figure 1b) une première vaque (A) irréversible vers 0,1 V/ECS ; cette vague est large (largeur à mi-hauteur 160 mV) et sa hauteur correspond au transfert d'un électron (par comparaison avec la

vague réversible du ferrocène). Cette vague est suivie d'une seconde vague irréversible (B) à -0,43 V/ECS correspondant à la consommation de six électrons. Lors du balayage retour, une vague anodique (C) apparaît (Ep(C) = + 0,38 V/ECS) à taquelle correspond une vague cathodique (D) lors du second balayage (Ep(D) = + 0,30 V/ECS). Dans HCl 0,1 N on observe un voltagramme similaire. La vague monoélectronique A est située vers -0,14 V/ECS et la vague B (six électrons) vers - 0,69 V/ECS.

Ces voltamogrammes peuvent être interprétés de la manière suivante : par comparaison avec les résultats obtenus en milieu aprotique et avec les résultats décrits par polarographie, la vague A peut être attribuée à la réaction :

$$NO_2C_6H_4N_2^+ + 1e^- \rightarrow NO_2C_6H_4N_2^{\bullet} \rightarrow NO_2C_6H_4^{\bullet} + N_2$$

Alors que la vague B peut être attribuée à la réduction du nitrobenzène en aniline selon le mécanisme classique décrit en milieu protique :

$$C_6H_5NO_2 + 2e^- + 2H^+ \rightarrow C_6H_5N(OH)_2$$

$$C_6H_5N(OH)_2 \rightarrow C_6H_5NO + H_2O$$

$$C_6H_5NO + 2e^- + 2H^+ \rightarrow C_6H_5\ NHOH$$

$$C_6H_5\ NHOH + 2e^- + 2H^+ \rightarrow C_6H_5NH_2$$

Dans le cas étudié, le signal correspond à la fois au nitrobenzène formé en solution et au groupe nitrobenzène greffé sur la surface. Le système C/D peut être attribué au couple phénylhydroxylamine/nitrosobenzène. Lors d'un second balayage (figure 1(b), courbe 2) la vague A du tétrafluoroborate de 4-nitrophényldiazonium correspondant à la réduction de la fonction diazonium a disparu. Ce phénomène était déjà observé lors de la réduction des sels de diazonium en milieu aprotique et s'observe à chaque fois qu'il y a greffage de la surface de carbone. On note aussi la diminution de la vague B au cours des balayages successifs ce qui indique que les groupes 4-nitrophényle greffés sur la surface sont progressivement réduits en groupes 4-aminophényle (qui ne présentent aucune vague en réduction).

Si on maintient le potentiel de l'électrode de carbone vitreux à -0,25 V/ECS (plus cathodique que celui de la vague A) (figure 2(a)) pendant une minute, dans une solution 5 mM de tétrafluoroborate de 4-nitrobenzène diazonium dans HCl 0,1 N, qu'on lave soigneusement l'électrode à l'eau, à l'alcool et à l'acétone (cinq minutes dans une cuve à ultrasons dans chaque solvant) puis qu'on la transfère dans une solution de ACN + 0,1 M $Net_4ClO_4$, (figure 2(b)) on observe alors le signal réversible du groupe 4-nitrophényle vers E° = -1,15 V/ECS c'est-à-dire au même potentiel que celui du nitrobenzène lui-même (figure 2(c)).

Ce système réversible diminue au cours des balayages successifs (probablement à la suite de la protonation du radical anion du nitrobenzène par les donneurs résiduels de protons de la solution).

L'ensemble de ces résultats montre que dans un milieu aqueux acide on observe le greffage d'un groupe 4-nitrophényle selon :

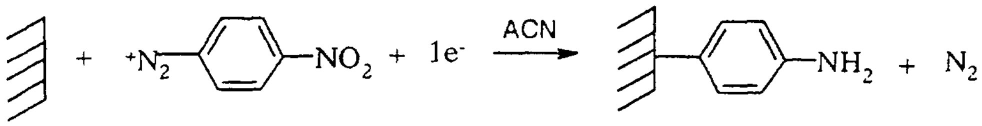


Lorsque l'électrode est transférée dans l'ACN + 0,1 M $NEt_4ClO_4$, on observe le même voltamogramme réversible dû au groupe 4-nitrophényle greffé que celui qui est observé lorsque le greffage est effectué en milieu ACN. Si par contre, l'électrode est laissée en milieu aqueux acide, on observe lors du balayage cathodique la réduction à six électrons du groupe nitro en groupe amino :

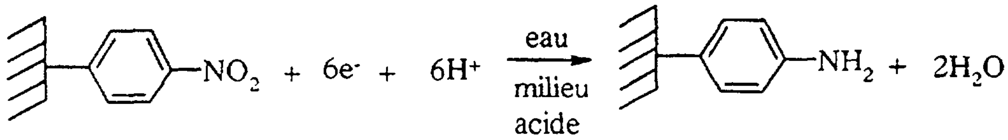


selon le mécanisme décrit ci-dessus.

Le greffage peut être confirmé par spectroscopie photoélectronique de rayons X (XPS). Le tableau 1 montre l'analyse XPS d'une plaque de CV propre, non traitée et de la même plaque électrolysée à -0,1 V/ECS dans une solution de 5 mM de tétrafluoroborate de 4-nitrobenzène diazonium 1 dans HCl 0,1N et soigneusement rincée à l'eau, à l'éthanol et à l'acétone (cinq minutes dans une cuve à ultrasons dans chaque solvant).

TABLEAU 1

| Analyses XPS de plaques de CV | | | | | |
|---|---|---|---|---|---|
| Eléments | C% | O% | N% | N% | Cl% |
| Pics (eV) | 285 | 533 | 400 | 406 | 201 |
| Plaque propre | 95 | 5 | 0,2 | 0 | 0 |
| Plaque greffée dans HCl 0,1 N | 84 | 10 | 2,6 | 2,4 | 0 |
| Plaque greffée puis traitée à l'épichlorhydrine | 81 | 15 | 1,6 | 0,8 | 1,2 |

On observe entre la plaque propre et la plaque greffée l'apparition du pic 406 eV correspondant au groupe $NO_2$ greffé, mais aussi du pic 400 eV correspondant au groupement $NH_2$. Cette dernière augmentation montre que à -0,1 V/ECS on réduit déjà une partie des groupes $NO_2$ en $NH_2$ comme on pouvait s'y attendre à l'examen de la figure 1b où à -0,1 V/ECS on se trouve déjà sur le pied de la vague de réduction du groupe nitro.

Des résultats analogues peuvent être obtenus sur des fibres de carbone. Par voltamétrie cyclique dans HCl 0,1 N, sur une mèche contenant quelques fibres (figure 3a) on observe la première vague du diazonium (A) vers -0,1 V/ECS. La mèche de fibres est greffée à ce potentiel pendant une minute, rincée comme précédemment dans une cuve à ultrasons puis transférée dans une solution ACN + $NEt_4ClO_4$ 0,1 M. Il apparaît alors une vague irréversible (figure 3b) correspondant au groupe 4-nitrophényle (l'irréversibilité de la vague est probablement due à une acidité résiduelle de la surface de la fibre). La vague du groupe 4-nitrophényle disparaît au cours des balayages successifs comme cela a déjà été noté sur une électrode de CV.

TABLEAU 2

| Analyse XPS de fibres de carbone | | | | | |
|---|---|---|---|---|---|
| Eléments | C % | O% | N% | N% | Cl% |
| Pics (eV) | 285 | 533 | 400 | 406 | 201 |
| Plaque propre | 80 | 20 | 0 | 0 | 0 |
| Plaque greffée dans HCl 0,1 N | 86 | 10,5 | 2 | 1 | 0 |
| Plaque greffée puis traitée à l'épichlorhydrine | 73 | 23 | 1,2 | 0,1 | 3,7 |

Par XPS (tableau 2) on observe l'apparition des pics d'azote correspondant à $NH_2$ à 400 eV et $NO_2$ à 406 eV.

Les plaques de CV et les fibres de carbone greffées par électrolyse de 1 en milieu aqueux acide et où une partie au moins des groupes nitro ont été réduits en groupes amino au cours du greffage peuvent être traités par l'épichlorhydrine pour montrer que les groupes amino sont effectivement susceptibles de réagir avec des groupes époxy selon la réaction :

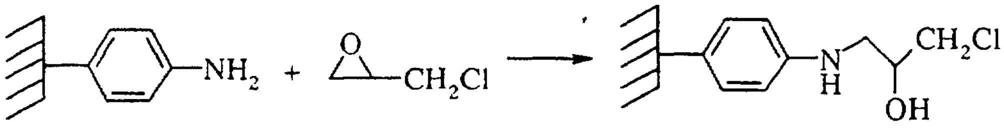

Le signal de $Cl_{2p}$ (qui apparaît sous forme de deux pics à cause des couplages spin-orbite) doit être facilement identifiable sur les spectres XPS de surfaces carbonées. On observe effectivement l'apparition des deux pics correspondant au $Cl_{2p}$ après avoir traité les plaques ou des fibres préalablement greffées dans HCl 0,1 M par l'épichlorhydrine à ébullition pendant dix heures.

<u>Exemple 2</u> : Greffage d'un sel de bis-diazonium

La réaction est schématisée de la façon suivante :

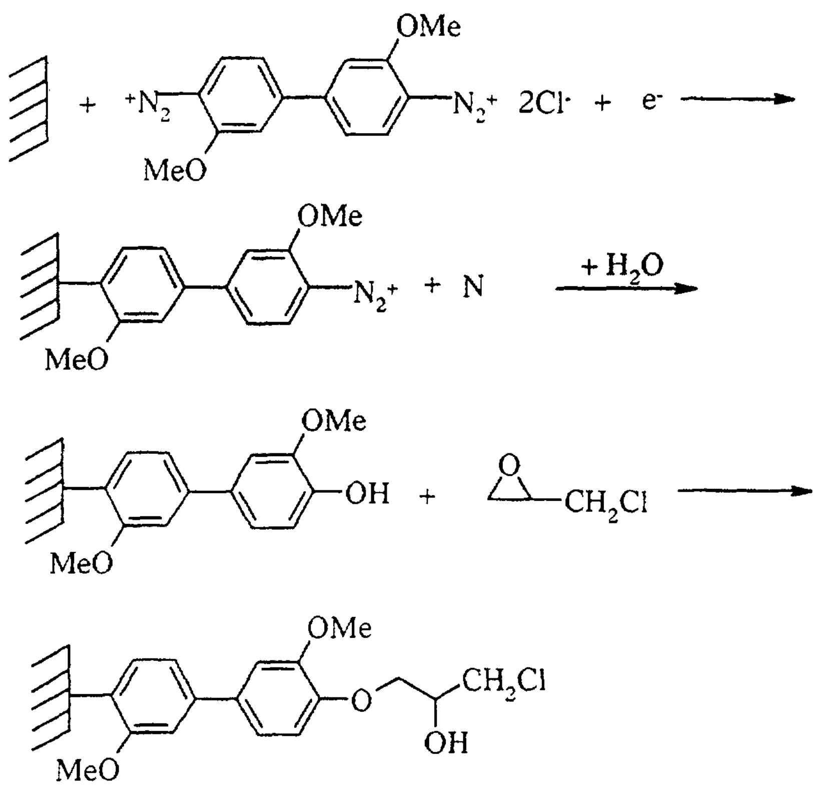


<u>*Voltamétrie cyclique du composé 2*</u>

Le composé 2 presente dans l'ACN + 0,1 M $Net_4$ $ClO_4$ une vague très large (largeur à mi-hauteur 300 mV) située à -0,1 V/ECS et correspondant au transfert de deux électrons. Cette vague large et biélectronique peut être interprétée comme la réduction successive à deux potentiels voisins mais décalée des deux fonctions diazonium. On observe un voltamogramme semblable dans HCl 0,1 M (figure 4) avec un pic situé vers -0,3 V/ECS.

Au second balayage, la vague a disparu ainsi qu'on l'observe à chaque fois qu'il y a greffage (figure 4, courbe 2). Afin d'observer la présence de groupes aromatiques sur la surface du carbone, on a traité l'électrode de carbone vitreux par un mélange nitrant ($HNO_3$ concentré + $H_2SO_4$ concentré). On observe alors, après un rinçage soigneux et transfert de l'électrode dans l'ACN + 0,1 M $Net_4$ $ClO_4$ un pic à -1,35 V/ECS dont la position est compatible avec celle d'un groupement nitroaryle 5 (par exemple le 4-nitroanisole est réduit à -1,25 V/ECS dans les mêmes conditions). On a vérifié que ce signal n'apparaît pas si l'électrode n'est pas préalablement modifiée par greffage du composé 2.

Le greffage d'une plaque de CV peut aussi être suivie par XPS (tableau 3) :

TABLEAU 3

| Analyse XPS d'une plaque de CV greffée par le composé 2 | | | | |
|---|---|---|---|---|
| Eléments | C % | O % | N % | Cl % |
| Pics (eV) | 285 | 533 | 400 | 201 |
| Plaque propre | 94 | 5 | 0,6 | 0,1 |
| Plaque greffée dans HCl 0,1 N | 85 | 13 | 1,5 | 0,2 |
| Plaque greffée puis traitée à l'épichlorhydrine | 80 | 17,5 | 0,8 | 1,7 |

La plaque propre est greffée dans HCl 0,1 N pendant 30 minutes, soigneusement rincée comme précédemment puis traitée par l'épichlorhydrine à ébullition pendant 10 heures. On observe l'augmentation du pic d'azote lors du greffage du composé 2 mais en même temps, l'augmentation du pic de l'oxygène ce qui semble indiquer une hydrolyse au moins partielle de la fonction diazonium non greffée au cours du traitement. Lors de la réaction avec l'épichlorhydrine, on observe une augmentation notable du pic correspondant au chlore indiquant que la réaction a bien eu lieu.

<u>Exemple 3</u> : Greffage d'un groupe arylcarboxylique.

On montre également qu'il est possible de greffer. des groupes phénylcarboxyliques ou phénylacétiques :

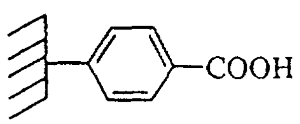

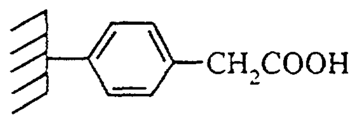

Ces groupes carboxyliques peuvent réagir avec les groupes amino du durcisseur de la résine (tel que le diaminodiphénylsulphone : DDS) selon la réaction ci-dessous : le groupe amino terminal pouvant à son tour réagir avec la fonction époxy de la résine.

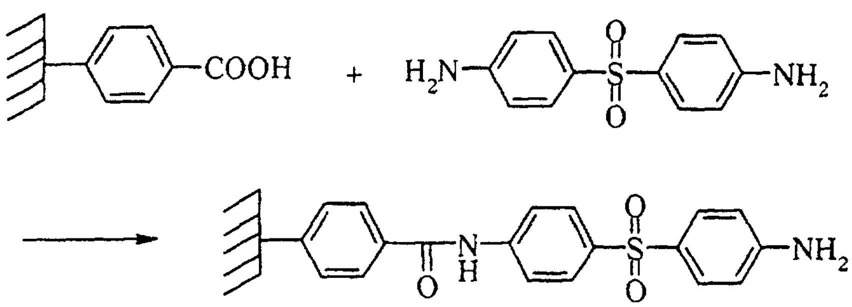

Dans l'acide chlorhydrique 0,1 N, le voltamogramme du tétrafluoroborate de diazonium de l'acide 4-phényl acétique 3 présente en réduction un pic irréversible vers -0,8 V/ECS :

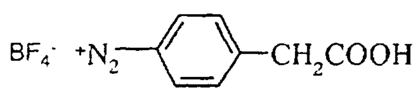

Exemple 4 : Etude du greffage du composé 5.

*Etude du greffage par voltamétrie cyclique*

Le voltamogramme d'une électrode de carbone vitreux soigneusement polie puis rincée aux ultrasons dans l'acétone puis l'éthanol est tracé dans une solution du sel de diazonium du chlorure de 4-(amino)benzyle $2.10^{-3}$ M + tétrafluoroborate de tétrabutylammonium 0,1 M dans l'acétonitrile, à vitesse de balayage v = 200 $mV.s^{-1}$. La courbe comporte une vague irréversible de valeur de potentiel de pic Ep = -0,53 V/ECS, qui disparait dès le deuxième balayage (figure 5).

*Etude du greffage sur plaque de carbone vitreux*

Deux échantillons de plaques de carbone vitreux greffés par réduction du sel de diazonium du chlorure de 4-(amino)benzyle sont préparées de la manière suivante : Après un polissage soigneux et un lavage aux ultra-sons dans l'acétone puis l'éthanol, chacune des plaques de carbone vitreux est greffée pendant 5 minutes au potentiel de - 0,53 V/ECS, dans une solution du sel de diazonium du chlorure de 4-(amino)benzyle $2.10^{-3}$ M + tétrafluoroborate de tétrabutylammonium 0,1 M + acide chlorhydrique 0,1 M dans l'acétonitrile.

Le greffage est ensuite caractérisé par spectroscopie de photoélectrons X (figures 6 et 7). La surface des échantillons présente un taux de carbone de 91%, un taux d'oxygène de 6,4%, et un taux de chlore de 2,6% après greffage. Ces résultats montrent que le greffage du sel de diazonium du chlorure de 4-(amino)benzyle a bien eu lieu selon le schéma suivant :

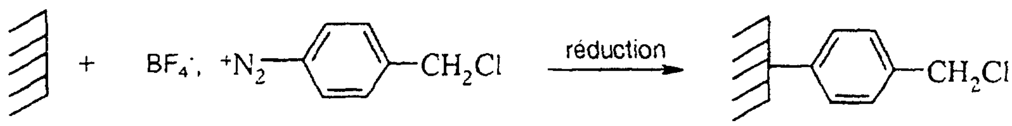


**Revendications**

1. Procédé de réalisation par réduction électrochimique d'un matériau carboné dont la surface est modifiée par des groupes organiques notamment fonctionnalisés, comprenant la mise en contact du matériau carboné avec un sel de diazonium organique en solvant, éventuellement en présence d'un autre électrolyte, la polarisation négative du matériau carboné par rapport à une anode également en contact avec la solution du sel de diazonium organique ou en contact avec une solution électrolytique séparée de la solution dudit sel, ledit procédé étant **caractérisé en ce que** la réduction électrochimique est effectuée sur un sel de diazonium organique en solvant protique en milieu acide et le potentiel de la cathode est fixé à une valeur telle que le radical neutre R. correspondant au groupe organique notamment fonctionnalisé ne soit pas réduit et ne conduise pas à un carbanion.

2. Procédé selon la revendication 1, **caractérisé en ce que** le sel de diazonium répond à la formule :

$$ArN_2{+}X- \qquad (I)$$

dans laquelle :

Ar est un reste aromatique en $C_6$-$C_{14}$, éventuellement fonctionnalisé par un ou plusieurs substituants ou un reste hétéroaromatique de 5 à 14 atomes, éventuellement fonctionnalisé par un ou plusieurs substituants, comportant un ou plusieurs hétéroatomes choisis parmi l'oxygène, l'azote, le soufre, le phosphore,
X- est un anion.

3. Procédé selon la revendication 2, **caractérisé en ce que** les substituants sont choisis dans le groupe constitué par :

- les radicaux aliphatiques, linéaires ou ramifiés, comportant éventuellement une ou plusieurs double(s) ou triple(s) liaison(s), éventuellement substitués par des radicaux carboxyle, $NO_2$, amino protégé disubstitué,

amino monosubstitué protégé, cyano, diazonium, alkoxy, alkoxycarbonyle, alkylcarbonyloxy, vinyle éventuellement fluoré, les atomes d'halogène,

- les radicaux aryle éventuellement substitués par des radicaux carboxyle, $NO_2$, amino protégé disubstitué, amino monosubstitué protégé, cyano, diazonium, alkoxy, alkoxycarbonyle, alkylcarbonyloxy, vinyle éventuellement fluoré, les atomes d'halogène,
- les radicaux carboxyle, $NO_2$, amino protégé disubstitué, amino monosubstitué protégé, cyano, diazonium, alkoxy, alkoxycarbonyle, alkylcarbonyloxy, vinyle éventuellement fluoré, les atomes d'halogène.

**4.** Procédé selon la revendication 3, **caractérisé en ce que** ledit groupe organique est fonctionnalisé par un ou plusieurs substituants susceptibles de réagir directement avec un substrat ou par un ou plusieurs substituants précurseurs qui, après transformation, sont susceptibles de réagir avec un substrat, ledit substrat étant choisi dans le groupe constitué par les résines organiques, les molécules biologiques, les molécules chimiques, les agents complexants.

**5.** Procédé selon la revendication 4, **caractérisé en ce que** les substituants susceptibles de réagir directement avec une résine organique sont choisis dans le groupe constitué par $-(CH_2)_n-COOH$, $-(CH_2)_n-CH_2-OH$, $(CH_2)_n-NH_2$, n étant un nombre entier compris entre 0 et 10, **en ce que** les substituants précurseurs susceptibles de réagir après transformation avec une résine organique sont choisis dans le groupe constitué par $NO_2$, $N_2^+$, $(CH_2)_n-CN$, $(CH_2)_n-CHO$, $(CH_2)_n-COOPr$, Pr étant un groupe protecteur, $(CH_2)_n-NHP'r$, $(CH_2)_n-N(P'r)_2$, $(CH_2)_n-N=P''r$, P'r, P"r étant un groupe protecteur, $(CH_2)_n-NHP'r$, $(CH_2)_n-N(P'r)_2$, $(CH_2)_n-N=P''r$, P'r, P"r étant des groupes protecteurs, n étant un nombre entier compris entre 0 et 10.

**6.** Procédé selon la revendication 4, **caractérisé en ce que** les substituants susceptibles de réagir directement avec une molécule biologique sont choisis dans le groupe constitué par $(CH_2)_n-COOH$, $(CH_2)_n-NH_2$, n étant un nombre entier compris entre 0 et 10, **en ce que** les substituants précurseurs susceptibles de réagir après transformation avec une molécule biologique sont choisis dans le groupe constitué par $NO_2$, $N_2^+$, $(CH_2)_n-CN$, $(CH_2)_n-CHO$, $(CH_2)_n-COOPr$, Pr étant un groupe protecteur, n étant un nombre entier compris entre 0 et 10.

**7.** Procédé selon la revendication 4, **caractérisé en ce que** les substituants susceptibles de réagir directement avec des molécules organiques fonctionnelles sont choisis dans le groupe constitué par $NO_2$, $(CH_2)_n-CONH_2$, $(CH_2)_n-CN$, $(CH_2)_n-CHO$, $(CH_2)_n-COOH$, $(CH_2)_n-CH_2OH$, $(CH_2)_n-NH_2$, n étant un nombre entier compris entre 0 et 10, $SO_2H$, $SO_3H$, $SO_2R$, $SO_3R$, R étant une chaîne carbonée aliphatique ou aromatique de 1 à 20 atomes de carbone, **en ce que** les substituants précurseurs susceptibles de réagir après transformation avec des molécules organiques fonctionnelles sont choisis dans le groupe consitué par $NO_2$, $(CH_2)_n-CONH_2$, $(CH_2)_n-COOPr$, Pr étant un groupe protecteur, $(CH_2)_n-NHP'r$, $(CH_2)_n-N(P'r)_2$, $(CH_2)_n-N=P''r$, P'r, P"r étant des groupes protecteurs, $(CH_2)_n-CN$, $(CH_2)_n-CHO$, $(CH_2)_n-COOH$, $(CH_2)_n-CH_2OH$, n étant un nombre entier compris entre 0 et 10, $SO_2Pr$, $SO_3Pr$, Pr étant un groupe protecteur choisi parmi les significations de R.

**8.** Procédé selon la revendication 1, caracérisé en ce que le solvant protique est choisi dans le groupe constitué par l'eau, le méthanol, l'éthanol ou leurs mélanges.

**9.** Procédé selon la revendication 8, **caractérisé en ce que** le solvant protique est en mélange avec un solvant aprotique étant entendu que le mélange présente les caractéristiques d'un solvant protique.

**10.** Procédé selon la revendication 1, **caractérisé en ce que** l'acide est choisi parmi les acides sulfurique, chlorhydrique, nitrique, nitreux, phosphorique, tétrafluoroborique.

**11.** Procédé selon l'une des revendications 1 à 10, **caractérisé en ce que** le pH de la solution est inférieur à 2.

**12.** Procédé selon la revendication 1, **caractérisé en ce que** la réduction est effectuée par électrolyse.

**13.** Procédé selon la revendication 1, **caractérisé en ce que** la réduction est effectuée par voltamétrie cyclique répétitive, le potentiel de la cathode variant dans un intervalle de potentiel tel que le radical neutre $R^\bullet$ correspondant au groupe organique notemment fonctionnalisé ne soit pas réduit et ne conduise pas à un carbanion, au lieu d'être fixé.

**14.** Procédé selon la revendicaton 1, **caractérisé en ce que** la concentration en sels de diazonium est comprise entre $10^{-3}$ et $10^{-4}$ mol/l.

**15.** Procédé de réalisation par voie électrochimique d'un matériau carboné dont la surface est modifiée par des groupes aromatiques aminés selon l'une des revendications 1 à 14, **caractérisé en ce que** le sel de diazonium aromatique est substitué par un radical nitro et **en ce que** la réduction électrochimique est maintenue jusqu'à la réduction du radical nitro en radical amino.

**16.** Procédé selon l'une des revendications 1 à 15, **caractérisé en ce que** le matériau carboné est sous forme de fibres, de poudre, de feutre, de tissu, de composite carbone/carbone.

**17.** Procédé selon l'une des revendications précédentes, **caractérisé en ce que** les matériaux carbonés modifiés sont soumis à une transformation subséquente des substituants fonctionnels.

**18.** Utilisation du procédé selon les revendications 1 à 17 pour constituer une librairie de chimie combinatoire de composés organiques.

**Patentansprüche**

**1.** Verfahren zur Herstellung eines Kohlenstoffmaterials, dessen Oberfläche mit organischen, insbesondere funktionalisierten Gruppen modifiziert ist, durch elektrochemische Reduktion, das das Inkontaktbringen des Kohlenstoffmaterials mit einem organischen Diazoniumsalz in Lösung, gegebenenfalls in Gegenwart eines anderen Elektrolyten, die negative Polarisation des Kohlenstoffmaterials, bezogen auf eine Anode, die ebenfalls mit der Lösung des organischen Diazoniumsalzes in Kontakt ist oder mit einer elektrolytischen Lösung, die von der Lösung besagten Salzes getrennt ist, in Kontakt ist, wobei besagtes Verfahren **dadurch gekennzeichnet ist, dass** die elektrochemische Reduktion über ein organisches Diazoniumsalz in protischem Lösungsmittel in saurem Medium ausgeführt wird und das Potential der Kathode auf einen solchen Wert festgelegt ist, dass das neutrale Radikal R', das der organischen, insbesondere funktionalisierten Gruppe entspricht, weder reduziert wird noch zu einem Carbanion führt.

**2.** Verfahren gemäß Anspruch 1, **dadurch gekennzeichnet, dass** das Diazoniumsalz der Formel:

$$ArN_2+X- \qquad (I)$$

entspricht, in der:

Ar ein aromatischer $C_6$-$C_{14}$-Rest ist, gegebenenfalls funktionalisiert mit einem oder mehreren Substituenten, oder ein heteroaromatischer Rest mit 5 bis 14 Atomen, gegebenenfalls funktionalisiert mit einem oder mehreren Substituenten, der ein oder mehrere unter Sauerstoff, Stickstoff, Schwefel, Phosphor ausgewählte Heteroatome umfasst,
X- ein Anion ist.

**3.** Verfahren gemäß Anspruch 2, **dadurch gekennzeichnet, dass** die Substituenten aus der Gruppe ausgewählt sind, die besteht aus:

- den aliphatischen linearen oder verzweigten Resten, die gegebenenfalls eine oder mehrere Doppel- oder Dreifachbindungen umfassen, gegebenenfalls substituiert mit den Resten Carboxyl, $NO_2$, disubstituiertem geschütztem Amino, geschütztem monosubstituierten Amino, Cyano, Diazonium, Alkoxy, Alkoxycarbonyl, Alkylcarbonyloxy, gegebenenfalls fluoriertem Vinyl, den Halogenatomen,
- den Arylresten, gegebenenfalls substituiert mit den Resten Carboxyl, $NO_2$, disubstituiertem geschütztem Amino, geschütztem monosubstituierten Amino, Cyano, Diazonium, Alkoxy, Alkoxycarbonyl, Alkylcarbonyloxy, gegebenenfalls fluoriertem Vinyl, den Halogenatomen
- den Resten Carboxyl, $NO_2$, disubstituiertem geschütztem Amino, geschütztem monosubstituierten Amino, Cyano, Diazonium, Alkoxy, Alkoxycarbonyl, Alkylcarbonyloxy, gegebenenfalls fluoriertem Vinyl, den Halogenatomen.

**4.** Verfahren gemäß Anspruch 3, **dadurch gekennzeichnet, dass** besagte organische Gruppe mit einem oder mehreren Substituenten, die fähig sind, direkt mit einem Substrat zu reagieren, oder mit einem oder mehreren Precursor-Substituenten, die nach Transformation fähig sind, mit einem Substrat zu reagieren, funktionalisiert ist, wobei besagtes Substrat aus der Gruppe ausgewählt ist, die aus den organischen Harzen, den biologischen Molekülen, den chemischen Molekülen, den Komplexbildnern besteht.

**5.** Verfahren gemäß Anspruch 4, **dadurch gekennzeichnet, dass** die Substituenten, die fähig sind, direkt mit einem organischen Harz zu reagieren, aus der Gruppe ausgewählt sind, die aus $-(CH_2)_n-COOH$, $-(CH_2)_n-CH_2-OH$, $(CH_2)_n-NH_2$ besteht, wobei n eine ganze Zahl zwischen 0 und 10 ist, dadurch, dass die Precursor-Substituenten, die fähig sind, nach Transformation mit einem organischen Harz zu reagieren, aus der Gruppe ausgewählt sind, die aus $NO_2$, $N_2^+$, $(CH_2)_n-CN$, $(CH_2)_n-CHO$, $(CH_2)_n-COOPr$, wobei Pr eine Schutzgruppe ist, $(CH_2)_n-NHP'r$, $(CH_2)_n-N(P'r)_2$, $(CH_2)_n-N{=}P''r$, wobei P'r, P"r eine Schutzgruppe ist, $(CH_2)_n-NHP'r$, $(CH_2)_n-N(P'r)_2$, $(CH_2)_n-N{=}P''r$, wobei P'r, P"r Schutzgruppen sind, besteht, wobei n eine ganze Zahl zwischen 0 und 10 ist.

**6.** Verfahren gemäß Anspruch 4, **dadurch gekennzeichnet, dass** die Substituenten, die fähig sind, direkt mit einem biologischen Molekül zu reagieren, aus der Gruppe ausgewählt sind, die aus $(CH_2)_n-COOH$, $(CH_2)_n-NH_2$ besteht, wobei n eine ganze Zahl zwischen 0 und 10 ist, dadurch, dass die Precursor-Substituenten, die fähig sind, nach Transformation mit einem biologischen Molekül zu reagieren, aus der Gruppe ausgewählt sind, die aus $NO_2$, $N_2^+$, $(CH_2)_n-CN$, $(CH_2)_n-CHO$, $(CH_2)_n-COOPr$, wobei Pr eine Schutzgruppe ist, besteht, wobei n eine ganze Zahl zwischen 0 und 10 ist.

**7.** Verfahren gemäß Anspruch 4, **dadurch gekennzeichnet, dass** die Substituenten, die fähig sind, direkt mit funktionellen organischen Molekülen zu reagieren, aus der Gruppe ausgewählt sind, die aus $NO_2$, $(CH_2)_n-CONH_2$, $(CH_2)_n-CN$, $(CH_2)_n-CHO$, $(CH_2)_n-COOH$, $(CH_2)_n-CH_2OH$, $(CH_2)_n-NH_2$, wobei n eine ganze Zahl zwischen 0 und 10 ist, $SO_2H$, $SO_3H$, $SO_2R$, $SO_3R$, wobei R eine aliphatische oder aromatische Kohlenstoffkette mit 1 bis 20 Kohlenstoffatomen ist, besteht, dadurch, dass die Precursor-Substituenten, die fähig sind, nach Transformation mit funktionellen organischen Molekülen zu reagieren, aus der Gruppe ausgewählt sind, die aus $NO_2$, $(CH_2)_n-CONH_2$, $(CH_2)_n-COOPr$, wobei Pr eine Schutzgruppe ist, $(CH_2)_n-NHP'r$, $(CH_2)_n-N(P'r)_2$, $(CH_2)_n-N{=}P''r$, wobei P'r, P"r Schutzgruppen sind, $(CH_2)_n-CN$, $(CH_2)_n-CHO$, $(CH_2)_n-COOH$, $(CH_2)_n-CH_2OH$, wobei n eine ganze Zahl zwischen 0 und 10 ist, $SO_2Pr$, $SO_3Pr$, wobei Pr eine Schutzgruppe ist, die unter den Bezeichnungen von R ausgewählt ist, besteht.

**8.** Verfahren gemäß Anspruch 1, **dadurch gekennzeichnet, dass** das protische Lösungsmittel aus der Gruppe ausgewählt ist, die aus Wasser, Methanol, Ethanol oder deren Gemischen besteht.

**9.** Verfahren gemäß Anspruch 8, **dadurch gekennzeichnet, dass** das protische Lösungsmittel mit einm aprotischen Lösungsmittel gemischt ist, wobei es sich versteht, dass das Gemisch die Eigenschaften eines protischen Lösungsmittels aufweist.

**10.** Verfahren gemäß Anspruch 1, **dadurch gekennzeichnet, dass** die Säure unter den Schwefel-, Salz-, Salpeter-, Salpetrig-, Phosphor-, Tetrafluorborsäuren ausgewählt ist.

**11.** Verfahren gemäß einem der Ansprüche 1 bis 10, **dadurch gekennzeichnet, dass** der pH der Lösung kleiner als 2 ist,

**12.** Verfahren gemäß Anspruch 1, **dadurch gekennzeichnet, dass** die Reduktion durch Elektrolyse ausgeführt wird.

**13.** Verfahren gemäß Anspruch 1, **dadurch gekennzeichnet, dass** die Reduktion durch wiederholte cyclische Voltammetrie ausgeführt wird, wobei das Potential der Kathode in einem solchen Potentialintervall variiert, dass das neutrale Radikal R', das der organischen, insbesondere funktionalisierten Gruppe entspricht, weder reduziert wird noch zu einem Carbanion führt, anstatt fixiert zu werden.

**14.** Verfahren gemäß Anspruch 1, **dadurch gekennzeichnet, dass** die Konzentration an Diazoniumsalzen zwischen $10^{-3}$ und $10^{-1}$ mol/l beträgt.

**15.** Verfahren zur elektrochemischen Herstellung eines Kohlenstoffmaterials, dessen Oberfläche mit aromatischen Aminogruppen modifiziert ist, gemäss einem der Ansprüche 1 bis 14, **dadurch gekennzeichnet, dass** das aromatische Diazoniumsalz mit einem Nitrorest substituiert ist und dadurch, dass die elektrochemische Reduktion bis zur Reduktion des Nitrorests in einen Aminorest aufrecht erhalten wird.

**16.** Verfahren gemäß einem der Ansprüche 1 bis 15, **dadurch gekennzeichnet, dass** das Kohlenstoffmaterial in Form

von Fasern, Pulver, Filz, Gewebe, Kohlenstoff/Kohlenstoff-Verbundmaterial vorliegt.

**17.** Verfahren gemäß einem der vorhergehenden Ansprüche, **dadurch gekennzeichnet, dass** die modifizierten Kohlenstoffmaterialien einer nachfolgenden Transformation durch funktionelle Substituenten unterzogen werden.

**18.** Verwendung des Verfahrens gemäß den Ansprüchen 1 bis 17, um eine Bibliothek der kombinatorischen Chemie aus organischen Verbindungen zu bilden.

## Claims

**1.** Process for preparing, by electrochemical reduction, a carbon-containing material whose surface is modified with organic groups, in particular functionalized organic groups, this process comprising placing the carbon-containing material in contact with an organic diazonium salt in solvent, optionally in the presence of another electrolyte, and negative polarization of the carbon-containing material relative to an anode which is also in contact with the solution of the organic diazonium salt or in contact with an electrolytic solution which is separate from the solution of the said salt, the said process being **characterized in that** the electrochemical reduction is carried out on an organic diazonium salt in protic solvent in acidic medium and the cathode potential is set at a value such that the neutral radical R. corresponding to the organic group, in particular functionalized organic group, is not reduced and does not give a carbanion.

**2.** Process according to Claim 1, **characterized in that** the diazonium salt corresponds to the formula:

$$ArN_2+X- \qquad (I)$$

in which:

Ar is a $C_6$-$C_{14}$ aromatic residue optionally functionalized with one or more substituents or a heteroaromatic residue of 5 to 14 atoms, optionally functionalized with one or more substituents, comprising one or more hetero atoms chosen from oxygen, nitrogen, sulphur and phosphorus,
X- is an anion.

**3.** Process according to Claim 2, **characterized in that** the substituents are chosen from the group consisting of:

- linear or branched aliphatic radicals optionally comprising one or more double or triple bond(s), optionally substituted with carboxyl, $NO_2$, disubstituted protected amino, monosubstituted protected amino, cyano, diazonium, alkoxy, alkoxycarbonyl, alkylcarbonyloxy or optionally fluorinated vinyl radicals or halogen atoms,
- aryl radicals optionally substituted with carboxyl, $NO_2$, disubstituted protected amino, monosubstituted protected amino, cyano, diazonium, alkoxy, alkoxycarbonyl, alkylcarbonyloxy or optionally fluorinated vinyl radicals or halogen atoms,
- carboxyl, $NO_2$, disubstituted protected amino, monosubstituted protected amino, cyano, diazonium, alkoxy, alkoxycarbonyl, alkylcarbonyloxy or optionally fluorinated vinyl radicals or halogen atoms.

**4.** Process according to Claim 3, **characterized in that** the said organic group is functionalized with one or more substituents capable of reacting directly with a substrate or with one or more precursor substituents which, after conversion, are capable of reacting with a substrate, the said substrate being chosen from the group consisting of organic resins, biological molecules, chemical molecules and complexing agents.

**5.** Process according to Claim 4, **characterized in that** the substituents capable of reacting directly with an organic resin are chosen from the group consisting of $-(CH_2)_n$-COOH, - $(CH_2)_n$-$CH_2$-OH and $(CH_2)_n$-$NH_2$ groups, n being an integer between 0 and 10, and **in that** the precursor substituents capable of reacting, after conversion, with an organic resin are chosen from the group consisting of $NO_2$, $N_2^+$, $(CH_2)_n$-CN, $(CH_2)_n$-CHO and $(CH_2)_n$-COOPr groups, Pr being a protecting group, and $(CH_2)_n$-NHP'r, $(CH_2)_n$-N(P'r)$_2$, $(CH_2)_n$-N=P"r groups, P'r and P"r being a protecting group, and $(CH_2)_n$-NHP'r, $(CH_2)_n$-N(P'r)$_2$ and $(CH_2)_n$-N=P"r groups, P'r and P"r being protecting groups and n being an integer between 0 and 10.

6. Process according to Claim 4, **characterized in that** the substituents capable of reacting directly with a biological molecule are chosen from the group consisting of $(CH_2)_n$-COOH and $(CH_2)_n$-$NH_2$ groups, n being an integer between 0 and 10, and **in that** the precursor substituents capable of reacting, after conversion, with a biological molecule are chosen from the group consisting of $NO_2$, $N_2^+$, $(CH_2)_n$-CN, $(CH_2)_n$-CHO and $(CH_2)_n$-COOPr groups, Pr being a protecting group and n being an integer between 0 and 10.

7. Process according to Claim 4, **characterized in that** the substituents capable of reacting directly with functional organic molecules are chosen from the group consisting of $NO_2$, $(CH_2)_n$-$CONH_2$ $(CH_2)_n$-CN, $(CH_2)_n$-CHO, $(CH_2)_n$-COOH, $(CH_2)_n$-$CH_2OH$ and $(CH_2)_n$-$NH_2$ groups, n being an integer between 0 and 10, and $SO_2H$, $SO_3H$, $SO_2R$ and $SO_3R$ groups, R being an aliphatic or aromatic carbon-based chain of 1 to 20 carbon atoms and **in that** the precursor substituents capable of reacting, after conversion, with functional organic molecules are chosen from the group consisting of $NO_2$, $(CH_2)_n$-$CONH_2$ and $(CH_2)_n$-COOPr groups, Pr being a protecting group, and $(CH_2)_n$-NHP'r, $(CH_2)_n$-N$(P'r)_2$ and $(CH_2)_n$-N=P"r groups, P'r and P"r being protecting groups, and $(CH_2)_n$-CN, $(CH_2)_n$-CHO, $(CH_2)_n$-COOH and $(CH_2)_n$-$CH_2OH$ groups, n being an integer between 0 and 10, and $SO_2Pr$ and $SO_3Pr$ groups, Pr being a protecting group chosen from the meanings of R.

8. Process according to Claim 1, **characterized in that** the protic solvent is chosen from the group consisting of water, methanol and ethanol or mixtures thereof.

9. Process according to Claim 8, **characterized in that** the protic solvent is in a mixture with an aprotic solvent, it being understood that the mixture has the characteristics of a protic solvent.

10. Process according to Claim 1, **characterized in that** the acid is chosen from sulphuric acid, hydrochloric acid, nitric acid, nitrous acid, phosphoric acid and tetrafluoroboric acid.

11. Process according to one of Claims 1 to 10, **characterized in that** the pH of the solution is less than 2.

12. Process according to Claim 1, **characterized in that** the reduction is carried out by electrolysis.

13. Process according to Claim 1, **characterized in that** the reduction is carried out by repetitive cyclic voltammetry, the cathode potential varying within a potential range such that the neutral radical $R^\bullet$ corresponding to the organic group, in particular functionalized organic group, is not reduced and does not give a carbanion instead of being bound.

14. Process according to Claim 1, **characterized in that** the diazonium salt concentration is between $10^{-3}$ and $10^{-1}$ mol/l.

15. Process for the electrochemical production of a carbon-containing material whose surface is modified with aromatic amino groups, according to one of Claims 1 to 14, **characterized in that** the aromatic diazonium salt is substituted with a nitro radical and **in that** the electrochemical reduction is maintained up to the reduction of the nitro radical into an amino radical.

16. Process according to one of Claims 1 to 15, **characterized in that** the carbon-containing material is in the form of fibres, powder, felt, fabric or carbon/carbon composite.

17. Process according to one of the preceding claims, **characterized in that** the modified carbon-containing materials are subjected to a subsequent conversion of the functional substituents.

18. Use of the process according to Claims 1 to 17, to make a combinatorial chemistry library of organic compounds.

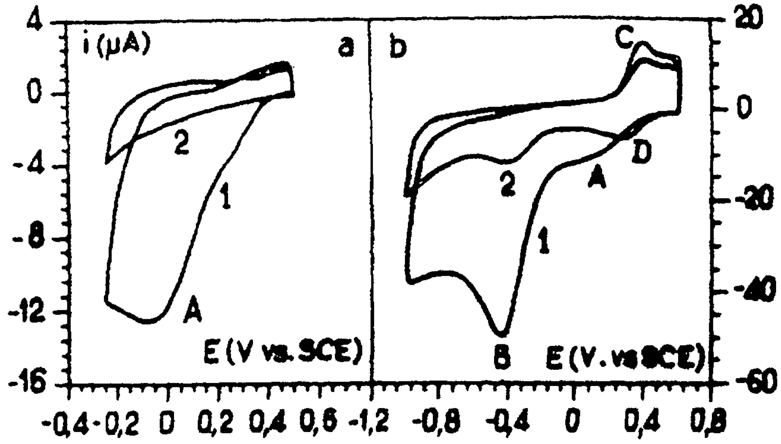


FIG_1

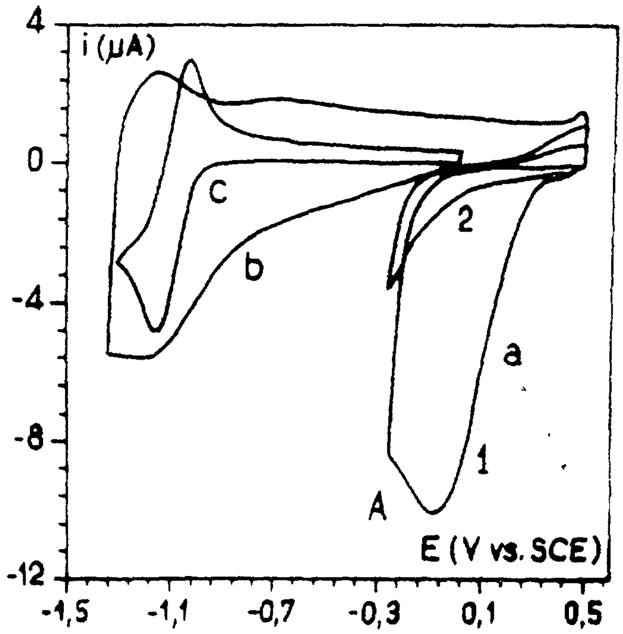


FIG_2

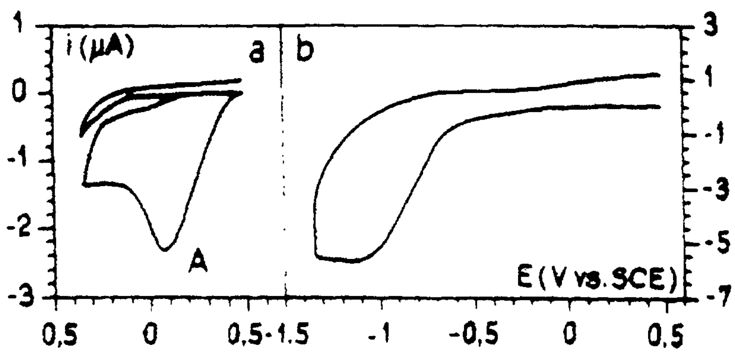


FIG_3

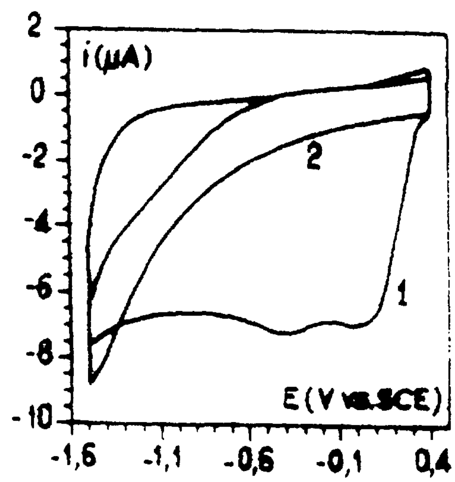


FIG_4

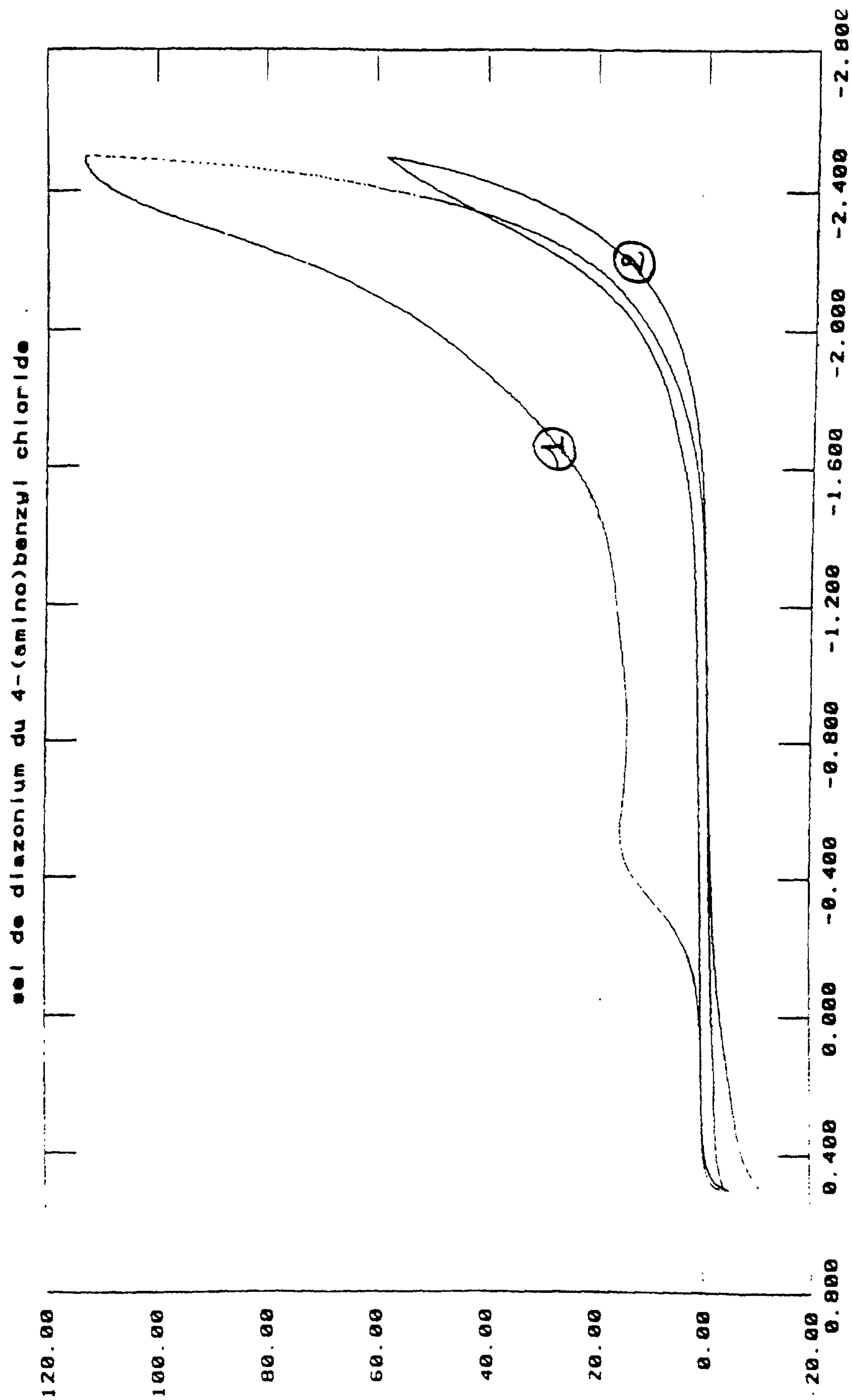
sel de diazonium du 4-(amino)benzyl chloride
120.00
100.00
80.00
60.00
40.00
20.00
0.00
-20.00
0.800
0.400
0.000
-0.400
-0.800
-1.200
-1.600
-2.000
-2.400
-2.800
1
2

Figure 5

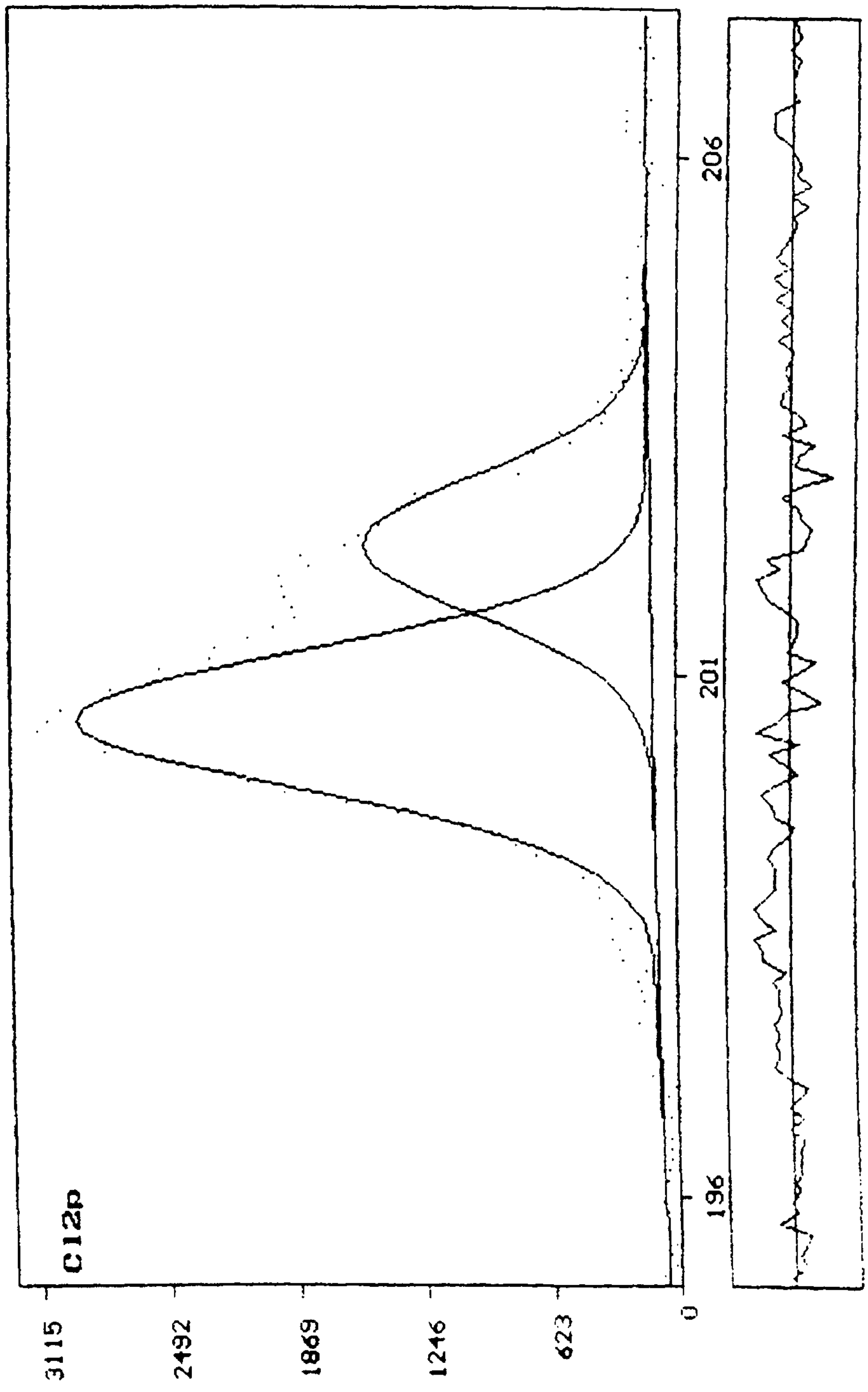


Figure 6

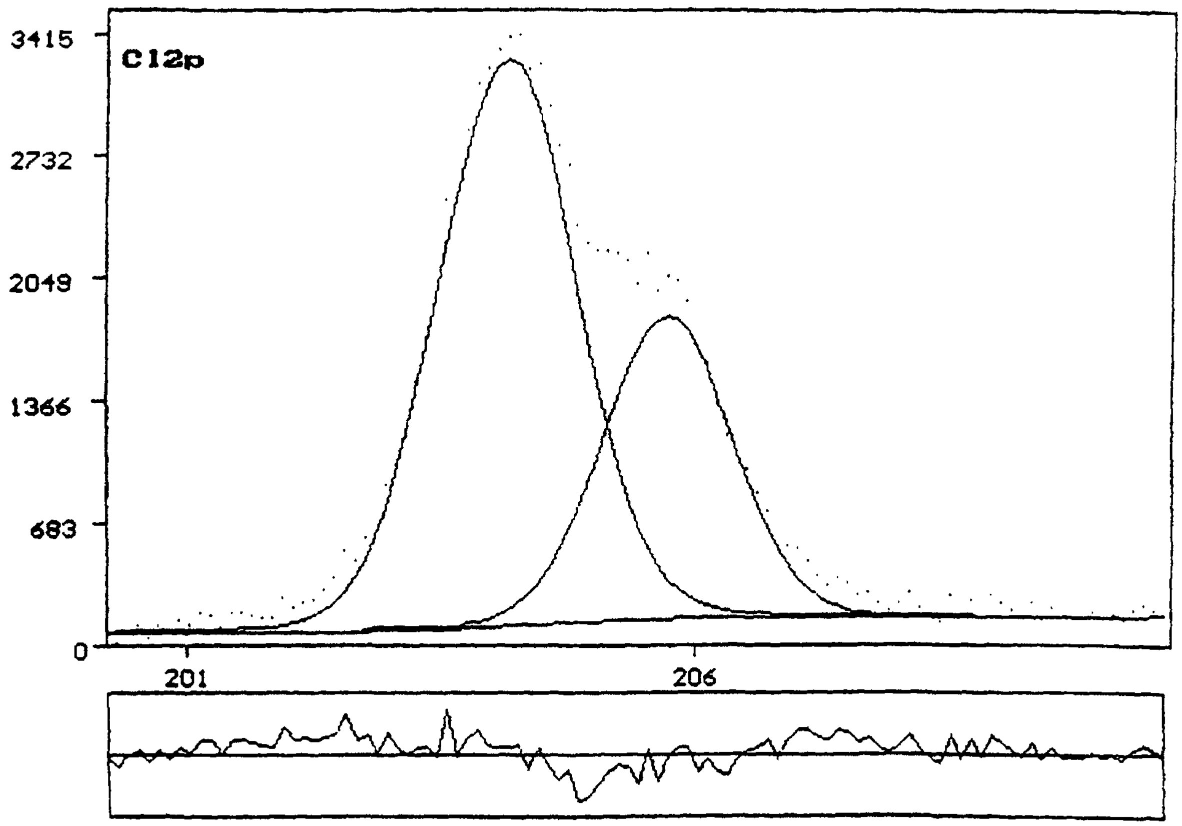


Figure 7